# EUROPEAN PATENT APPLICATION

(11) **EP 2 958 356 A1**
(43) Date of publication of application: **23.12.2015**
(21) Application number: 13876499.8
(22) Date of filing: 01.03.2013
(51) Int. Cl.: H04W 16/10

(54) **METHOD, APPARATUS, DEVICE, AND SYSTEM FOR REDUCING CONTROL CHANNEL INTERFERENCE**

(71) Applicant: Huawei Technologies Co., Ltd., Longgang District Shenzhen, Guangdong 518129 (CN)
(72) Inventor: QUAN, Wei, Shenzhen Guangdong 518129 (CN); ZHANG, Jian, Shenzhen Guangdong 518129 (CN)
(74) Representative: Pfenning, Meinig & Partner GbR
(86) International application number: PCT/CN2013/072035
(87) International publication number: WO 2014/131190

(57) **Abstract**

Embodiments of the present invention disclose a method, an apparatus, a device, and a system for reducing interference to a control channel. The method includes: acquiring configuration information of the control channel, where the configuration information includes at least one of the following information: a configuration period of the control channel, resource occupation indication information, and a configuration period start position, where the resource occupation indication information is used to indicate physical resource blocks PRBs occupied by the control channel in the configuration period, and the configuration period start position is used to indicate a corresponding start point at the beginning of the configuration period; and sending the configuration information to a neighboring base station, so that the neighboring base station performs adjustment according to the configuration information to reduce interference to the control channel of the base station. In the embodiments of the present invention, after receiving the configuration information, the neighboring base station can precisely learn a status of PRB occupation, by the control channel, in the serving base station, and then can reduce interference to the serving base station by performing corresponding adjustment, avoiding a conflict, and thereby effectively resolving a problem of mutual interference of control channels between the base stations.

## Description

### TECHNICAL FIELD

The present invention relates to the field of base station communications technologies, and in particular, to a method, an apparatus, a device, and a system for reducing interference to a control channel.

### BACKGROUND

With the rapid development of communications technologies, there are an increasing number of base stations, which inevitably brings a problem of mutual interference of various control channels between neighboring base stations.

An LTE/LTE-A (LTE, Long Term Evolution, Long Term Evolution; LTE-A, LTE-advanced, LTE-advanced) system is used as an example. An enhanced PDCCH (Physical Downlink Control Channel, physical downlink control channel), which is referred to as an EPDCCH (Enhanced Physical Downlink Control Channel, enhanced physical downlink control channel), is introduced into the system. To mitigate a problem of mutual interference of EPDCCHs between intra-frequency neighboring cells, on one hand, an ICIC (Inter cell interference coordination, inter-cell interference coordination) technology is introduced into the LTE/LTE-A. In the ICIC technology, a current serving base station (hereinafter referred to as a serving base station) sends HII (High Interference Indication, high interference indication) information to a neighboring base station (hereinafter referred to as a neighboring base station) of the serving base station, where the HII information is used to indicate a degree of sensitivity of a PRB (Physical Resource Block, physical resource block) in an uplink resource of the serving base station to interference, 1 indicates that the degree of the sensitivity to the interference is high, 0 indicates that the degree of the sensitivity to the interference is low, and the interference is interference caused by a PRB of a cell belonging to the neighboring base station. On the other hand, the serving base station may further send RNTP (Relative Narrowband Transmission Power, relative narrowband transmit power) information to the neighboring base station, to notify the neighboring base station of a status of transmit power of a PRB in a downlink resource of the neighboring base station, so that the neighboring base station knows a level of possible interference from the serving base station, that is, whether the transmit power of the PRB exceeds a given threshold, where 0 indicates that transmit power of a PRB corresponding to 0 does not exceed the given threshold, and 1 indicates that transmit power of a PRB corresponding to 1 is not ensured to be lower than the given threshold.

The foregoing two existing methods for reducing mutual interference of control channels both have disadvantages, which are mainly that: PRBs cannot be distinguished in the HII or RNTP information; therefore, the neighboring base station is not clear about use of PRBs on the serving base station, including which PRBs are used for a control channel of the serving base station, and interference coordination cannot be performed well to avoid the mutual interference.

### SUMMARY

In view of this, an objective of embodiments of the present invention is to provide a method, an apparatus, a device, and a system for reducing interference to a control channel, to effectively resolve a problem of mutual interference of control channels between base stations.

An embodiment of the present invention provides a method for reducing interference to a control channel, applied to a base station, where the method includes:
acquiring configuration information of the control channel, where the configuration information includes at least one of the following information: a configuration period of the control channel, resource occupation indication information, and a configuration period start position, where the resource occupation indication information is used to indicate physical resource blocks PRBs occupied by the control channel in the configuration period, and the configuration period start position is used to indicate a corresponding start point at the beginning of the configuration period; and
sending the configuration information to a neighboring base station, so that the neighboring base station performs adjustment according to the configuration information to reduce interference to the control channel of the base station.

Preferably, when the base station is synchronous with the neighboring base station, the configuration period start position includes a subframe number at the beginning of the configuration period; or when the base station is not synchronous with the neighboring base station, the configuration period start position includes a subframe number at the beginning of the configuration period plus a timing offset between the base station and the neighboring base station.

Preferably, the configuration information further includes at least one of the following information:
transmit power information of the PRBs occupied by the control channel, where the transmit power information of the PRBs includes transmit power values of the PRBs and/or values of comparison between the transmit power values of the PRBs and a set power threshold;
a search space type of the control channel, where the search space type includes common search space or user equipment UE specific search space;
a distribution type of the control channel, where the distribution type includes a centralized type or a distributed type; and
a start OFDM symbol of the control channel in each subframe.

Preferably, when the PRBs occupied by the control channel are a same PRB, the transmit power values are a transmit power value of the same PRB; or when at least two PRBs in the PRBs occupied by the control channel are different, the transmit power values include a transmit power value of each PRB occupied by the control channel.

Preferably, the sending the configuration information to a neighboring base station includes:
sending the configuration information to the neighboring base station in a manner of carrying the configuration information by newly adding an information element IE to a load information Load Information message sent to the neighboring base station; or
sending the configuration information to the neighboring base station in a manner of carrying the configuration information by newly adding an IE to a setup request Setup Request message sent to the neighboring base station.

Preferably, the sending the configuration information to a neighboring base station includes:
sending the configuration information to the neighboring base station by means of operation, administration and maintenance OAM.

Preferably, the sending the configuration information to a neighboring base station includes:
sending the configuration information to a first mobility management entity MME, so that the first MME sends the configuration information to a second MME, and the second MME sends the configuration information to the neighboring base station, where the first MME is an MME to which the base station belongs, and the second MME is an MME to which the neighboring base station belongs; or
sending the configuration information to a third MME, so that the third MME sends the configuration information to the neighboring base station, where the third MME is an MME to which the base station and the neighboring base station both belong.

An embodiment of the present invention further provides an apparatus for reducing interference to a control channel, where the apparatus includes:
a configuration information acquiring unit, configured to acquire configuration information of the control channel, where the configuration information includes at least one of the following information: a configuration period of the control channel, resource occupation indication information, and a configuration period start position, where the resource occupation indication information is used to indicate physical resource blocks PRBs occupied by the control channel in the configuration period, and the configuration period start position is used to indicate a corresponding start point at the beginning of the configuration period; and
a configuration information sending unit, configured to send the configuration information to a neighboring base station, so that the neighboring base station performs adjustment according to the configuration information to reduce interference to the control channel of the base station.

Preferably, when the base station is synchronous with the neighboring base station, the configuration period start position includes a subframe number at the beginning of the configuration period; or when the base station is not synchronous with the neighboring base station, the configuration period start position includes a subframe number at the beginning of the configuration period plus a timing offset between the base station and the neighboring base station.

Preferably, the configuration information further includes at least one of the following information:
transmit power information of the PRBs occupied by the control channel, where the transmit power information of the PRBs includes transmit power values of the PRBs and/or values of comparison between the transmit power values of the PRBs and a set power threshold;
a search space type of the control channel, where the search space type includes common search space or user equipment UE specific search space;
a distribution type of the control channel, where the distribution type includes a centralized type or a distributed type; and
a start OFDM symbol of the control channel in each subframe.

Preferably, when the PRBs occupied by the control channel are a same PRB, the transmit power values are a transmit power value of the same PRB; or when at least two PRBs in the PRBs occupied by the control channel are different, the transmit power values include a transmit power value of each PRB occupied by the control channel.

Preferably,
the configuration information sending unit is configured to send the configuration information to the neighboring base station in a manner of carrying the configuration information by newly adding an information element IE to a load information Load Information message sent to the neighboring base station; or
the configuration information sending unit is configured to send the configuration information to the neighboring base station in a manner of carrying the configuration information by newly adding an IE to a setup request Setup Request message sent to the neighboring base station.

Preferably, the configuration information sending unit is configured to send the configuration information to the neighboring base station by means of operation, administration and maintenance OAM.

Preferably,
the configuration information sending unit is configured to send the configuration information to a first mobility management entity MME, so that the first MME sends the configuration information to a second MME, and the second MME sends the configuration information to the neighboring base station, where the first MME is an MME to which the base station belongs, and the second MME is an MME to which the neighboring base station belongs; or
the configuration information sending unit is configured to send the configuration information to a third MME, so that the third MME sends the configuration information to the neighboring base station, where the third MME is an MME to which the base station and the neighboring base station both belong.

An embodiment of the present invention further provides a device for reducing interference to a control channel, where the device includes:
a processor, configured to acquire configuration information of the control channel, where the configuration information includes at least one of the following information: a configuration period of the control channel, resource occupation indication information, and a configuration period start position, where the resource occupation indication information is used to indicate physical resource blocks PRBs occupied by the control channel in the configuration period, and the configuration period start position is used to indicate a corresponding start point at the beginning of the configuration period; and
a transmitter, configured to send the configuration information to a neighboring base station, so that the neighboring base station performs adjustment according to the configuration information to reduce interference to the control channel of the base station.

Preferably, when the base station is synchronous with the neighboring base station, the configuration period start position includes a subframe number at the beginning of the configuration period; or when the base station is not synchronous with the neighboring base station, the configuration period start position includes a subframe number at the beginning of the configuration period plus a timing offset between the base station and the neighboring base station.

Preferably, the configuration information further includes at least one of the following information:
transmit power information of the PRBs occupied by the control channel, where the transmit power information of the PRBs includes transmit power values of the PRBs and/or values of comparison between the transmit power values of the PRBs and a set power threshold;
a search space type of the control channel, where the search space type includes common search space or user equipment UE specific search space;
a distribution type of the control channel, where the distribution type includes a centralized type or a distributed type; and
a start OFDM symbol of the control channel in each subframe.

Preferably, when the PRBs occupied by the control channel are a same PRB, the transmit power values are a transmit power value of the same PRB; or when at least two PRBs in the PRBs occupied by the control channel are different, the transmit power values include a transmit power value of each PRB occupied by the control channel.

Preferably,
the transmitter is configured to send the configuration information to the neighboring base station in a manner of carrying the configuration information by newly adding an information element IE to a load information Load Information message sent to the neighboring base station; or
the transmitter is configured to send the configuration information to the neighboring base station in a manner of carrying the configuration information by newly adding an IE to a setup request Setup Request message sent to the neighboring base station.

Preferably, the transmitter is configured to send the configuration information to the neighboring base station by means of operation, administration and maintenance OAM.

Preferably,
the transmitter is configured to send the configuration information to a first mobility management entity MME, so that the first MME sends the configuration information to a second MME, and the second MME sends the configuration information to the neighboring base station, where the first MME is an MME to which the base station belongs, and the second MME is an MME to which the neighboring base station belongs; or
the transmitter is configured to send the configuration information to a third MME, so that the third MME sends the configuration information to the neighboring base station, where the third MME is an MME to which the base station and the neighboring base station both belong.

An embodiment of the present invention further provides a system for reducing interference to a control channel, where the system includes:
a serving base station, configured to acquire configuration information of the control channel, where the configuration information includes at least one of the following information: a configuration period of the control channel, resource occupation indication information, and a configuration period start position, where the resource occupation indication information is used to indicate physical resource blocks PRBs occupied by the control channel in the configuration period, and the configuration period start position is used to indicate a corresponding start point at the beginning of the configuration period; and send the configuration information to a neighboring base station, so that the neighboring base station performs adjustment according to the configuration information to reduce interference to the control channel of the base station; and
the neighboring base station, configured to receive the configuration information, and perform adjustment according to the configuration information to reduce the interference to the control channel of the serving base station.

In the embodiments of the present invention, configuration information of a control channel of a current serving base station can be acquired, and the configuration information can be sent to a neighboring base station, where the configuration information may include one or more types of information in a configuration period of the control channel, physical resource blocks PRBs occupied by the control channel in the configuration period, a configuration period start position, and the like. After receiving the configuration information, the neighboring base station can precisely learn a status of PRB occupation, by the control channel, in the serving base station, and then can reduce interference to the serving base station by performing corresponding adjustment, avoiding a conflict, and thereby effectively resolving a problem of mutual interference of control channels between the base stations.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a method according to Embodiment 1 of the present invention;
FIG. 2 is a schematic diagram of signaling according to Embodiment 2 of the present invention;
FIG. 3 is a schematic diagram of signaling according to Embodiment 3 of the present invention;
FIG. 4 is a schematic diagram of first signaling according to Embodiment 4 of the present invention;
FIG. 5 is a schematic diagram of second signaling according to Embodiment 4 of the present invention;
FIG. 6 is a schematic diagram of an apparatus according to Embodiment 5 of the present invention;
FIG. 7 is a schematic diagram of a device according to Embodiment 6 of the present invention; and
FIG. 8 is a schematic diagram of a system according to Embodiment 7 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

### Embodiment 1

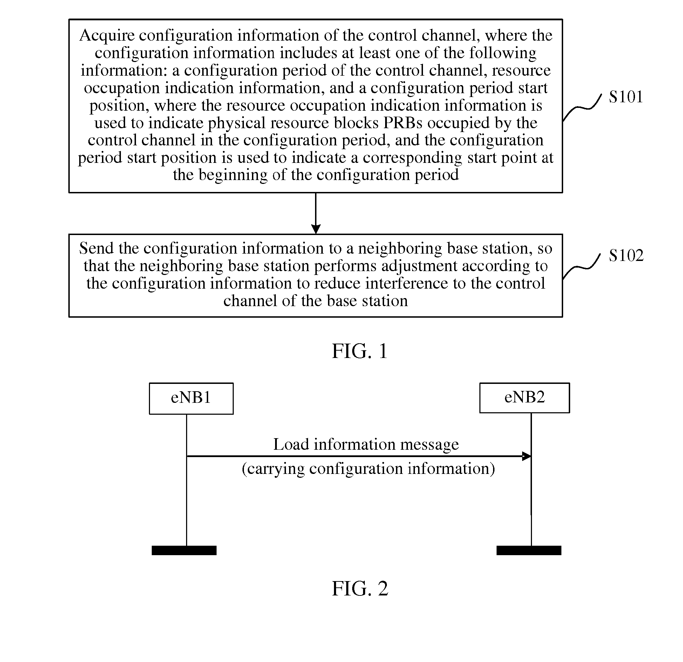

FIG. 1 is a flowchart of a method according to Embodiment 1 of the present invention. This embodiment provides a method for reducing interference to a control channel, applied to a base station (that is, a serving base station, which is different from a neighboring base station), where the method includes:
S101: Acquire configuration information of the control channel, where the configuration information includes at least one of the following information: a configuration period of the control channel, resource occupation indication information, and a configuration period start position, where the resource occupation indication information is used to indicate physical resource blocks PRBs occupied by the control channel in the configuration period, and the configuration period start position is used to indicate a corresponding start point at the beginning of the configuration period.

The configuration information may be set in the base station, or may be sent to the base station by an entity that manages the base station or another entity, and so on. In other words, how to specifically acquire the configuration information is not limited in this embodiment of the present invention.

When the base station is synchronous with the neighboring base station, the configuration period start position includes a subframe number at the beginning of the configuration period; or when the base station is not synchronous with the neighboring base station, the configuration period start position includes a subframe number at the beginning of the configuration period plus a timing offset between the base station and the neighboring base station.

The following emphasizes description of information included in the configuration information. It should be noted that, when periodicity configuration is performed on the control channel, a level of a period may be high or low, and granularity may be large or small, for example, the granularity may be a frame, or the granularity may be a subframe in a frame, or even the granularity may be a resource in a subframe, which is not limited in this embodiment of the present invention.

The following provides further description by using an example in which the control channel is an EPDCCH and the granularity of the period configuration is a PRB in a subframe.

Unlike a PDCCH, the EPDCCH is not located in a control area of the first n OFDM symbols of a subframe, but is in an area in which the subframe transmits downlink data; and uses a frequency different from that of a PDSCH (Physical Downlink Shared Channel, physical downlink shared channel), and may occupy a PRB different from that occupied by the PDSCH. For the EPDCCH, precoding transmission similar to that for the PDSCH may be performed, and demodulation may be performed based on a UE (User Equipment, user equipment) specific reference signal. In different subframes, quantities and distribution statuses of EPDCCHs may be the same or different. If the neighboring base station is not clear about a quantity and distribution statuses of EPDCCHs in a subframe of the serving base station, it is very likely to cause a conflict or interference.

In this embodiment, configuration information of the EPDCCH, such as EPDCCH pattern information EPDCCH pattern info, may include one or more types of the following three types of information:
a) a configuration period of the EPDCCH: distribution statuses of EPDCCHs may be different in different subframes, or PRBs or PRB pairs occupied in each subframe may be different, but after multiple consecutive subframes, a characteristic of periodic repetition may appear in the distribution statuses of the EPDCCHs; and in other words, configuration of the EPDCCHs may be periodically repeated, for example, the configuration period may be 10 ms, 20 ms, or the like; and the PRB pairs are PRB Pairs, one PRB occupies one timeslot in a time domain, one subframe includes two timeslots, and therefore a PDSCH resource is generally allocated by using a PRB pair as a unit, where the PRB pair may be on a same frequency resource, or may be on different frequency resources in a frequency hopping manner, which is not limited in the present invention;
b) resource occupation indication information, that is, PRBs occupied by the EPDCCH in the configuration period of the EPDCCH: the resource occupation indication information can indicate which PRBs are used for the EPDCCH, and specifically, can indicate which PRBs in each subframe are used for the EPDCCH; and distribution statuses of EPDCCHs in different subframes in one configuration period can be learned by using the resource occupation indication information, and configuration statuses of EPDCCHs in a very long time can be obtained with reference to multiple configuration periods; and
c) a configuration period start position: the configuration period start position is used to indicate a corresponding start point at the beginning of the configuration period; in this embodiment, the base station is synchronous with the neighboring base station, and the configuration period start position is a corresponding subframe at the beginning of the configuration period, and may be specifically indicated by using an offset Offset; in other words, the Offset is used to indicate which subframe the configuration period starts from in a series of consecutive subframes; and a value of Offset is generally from "0" to "the configuration period - 1" subframes.

For convenience of understanding, the following further provides description by using an example. Refer to Table 1:

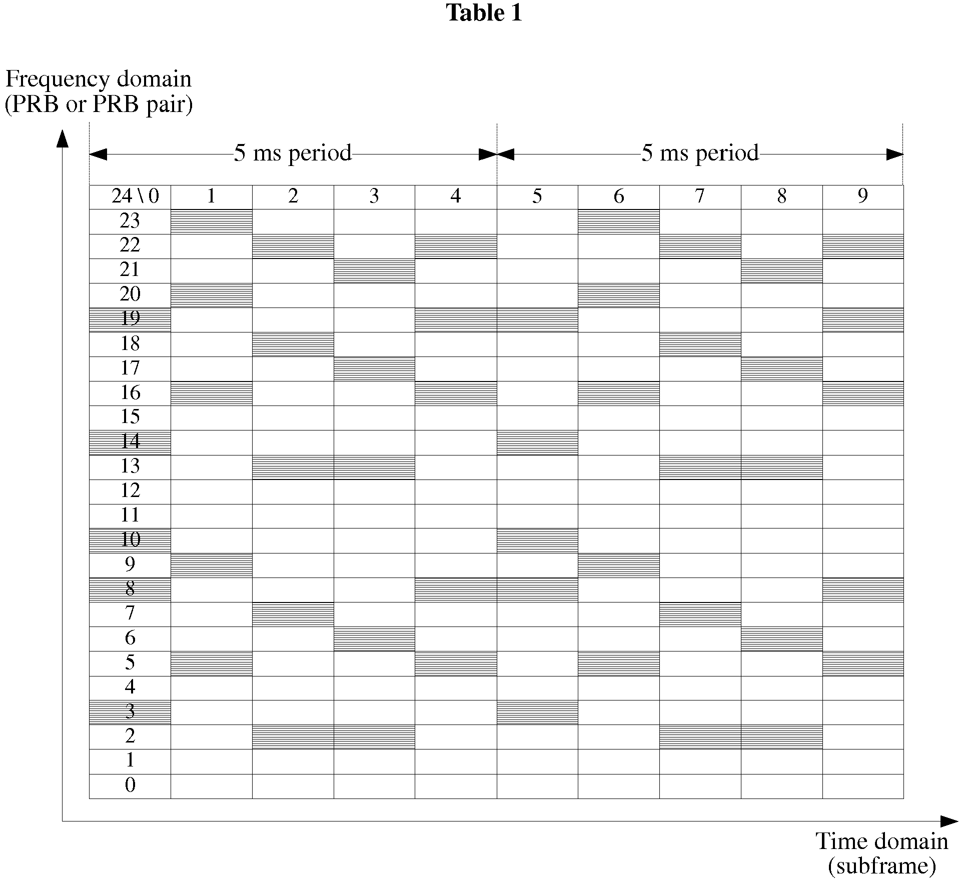

In the table, each column represents one subframe, each subframe is 1 ms, and each row represents one PRB; and in the table, a block filled with horizontal lines indicates that the PRB or PRB pair in the subframe is occupied by an EPDCCH, that is, the PRB or PRB pair is used for the EPDCCH. It can be seen that, in the table, a configuration period of the EPDCCH is 5 ms, that is, distribution statuses of EPDCCHs in subframes 0 to 4 are the same as distribution statuses of EPDCCHs in subframes 5 to 9; and in one configuration period (the subframes 0 to 4, that is, a first configuration period, are used as an example), distribution statuses of PRBs or PRB pairs of an EPDCCH corresponding to each subframe are:
the subframe 0: PRBs or PRB pairs 3, 8, 10, 14 and 19 are used for the EPDCCH;
the subframe 1: PRBs or PRB pairs 5, 9, 16, 20 and 23 are used for the EPDCCH;
the subframe 2: PRBs or PRB pairs 2, 7, 13, 18 and 22 are used for the EPDCCH;
the subframe 3: PRBs or PRB pairs 2, 6, 13, 17 and 21 are used for the EPDCCH; and
the subframe 4: PRBs or PRB pairs 5, 8, 16, 19 and 22 are used for the EPDCCH.

It should be noted that, an Offset in the table is 0, that is, in the series of consecutive subframes 0 to 9, a configuration period of the EPDCCH begins from the subframe 0.

Generally, a method of using an Offset is as follows:
when the neighboring base station is synchronous with the serving base station in the time domain, after receiving the configuration information of the EPDCCH of the serving base station, the neighboring base station may determine a start point of the configuration period by calculating an (SFNx10+SubSFN)%T value of each subframe, where the SFN is System Frame Number, that is, a system frame number, the SubSFN is a subframe number, 10 indicates that one frame includes 10 subframes, and T is the configuration period of the EPDCCH. A rule of the determining may be that: if (SFNx10+SubSFN)%T of a subframe is equal to the Offset, it indicates that the configuration period of the EPDCCH begins from the subframe, and in this case, at the beginning, a resource occupation status of the EPDCCH in the period can be learned according to corresponding resource occupation indication information of the EPDCCH.

When the neighboring base station is not synchronous with the serving base station in the time domain, the neighboring base station first acquires a timing offset between the neighboring base station and the serving base station, and then the neighboring base station determines a subframe at the beginning of a configuration period of the serving base station according to the calculated (SFNx10+SubSFN)%T value of each subframe and the timing offset between the neighboring base station and the serving base station. Specifically, if (SFNx10+SubSFN)%T of a subframe plus the timing offset between the neighboring base station and the serving base station is equal to the Offset, it indicates that the configuration period of the EPDCCH begins from the subframe.

In addition, in some embodiments of the present invention, there may be more than one EPDCCH in a subframe; and in this case, a configuration status of one EPDCCH may be referred to as an EPDCCH configuration set EPDCCH Set, and different EPDCCHs may all have respective periods and Offsets, without affecting each other. Referring to Table 2, blocks filled with vertical lines and horizontal lines in Table 2 each indicate an EPDCCH configuration set, for example, EPDCCH Set1 and EPDCCH Set2.

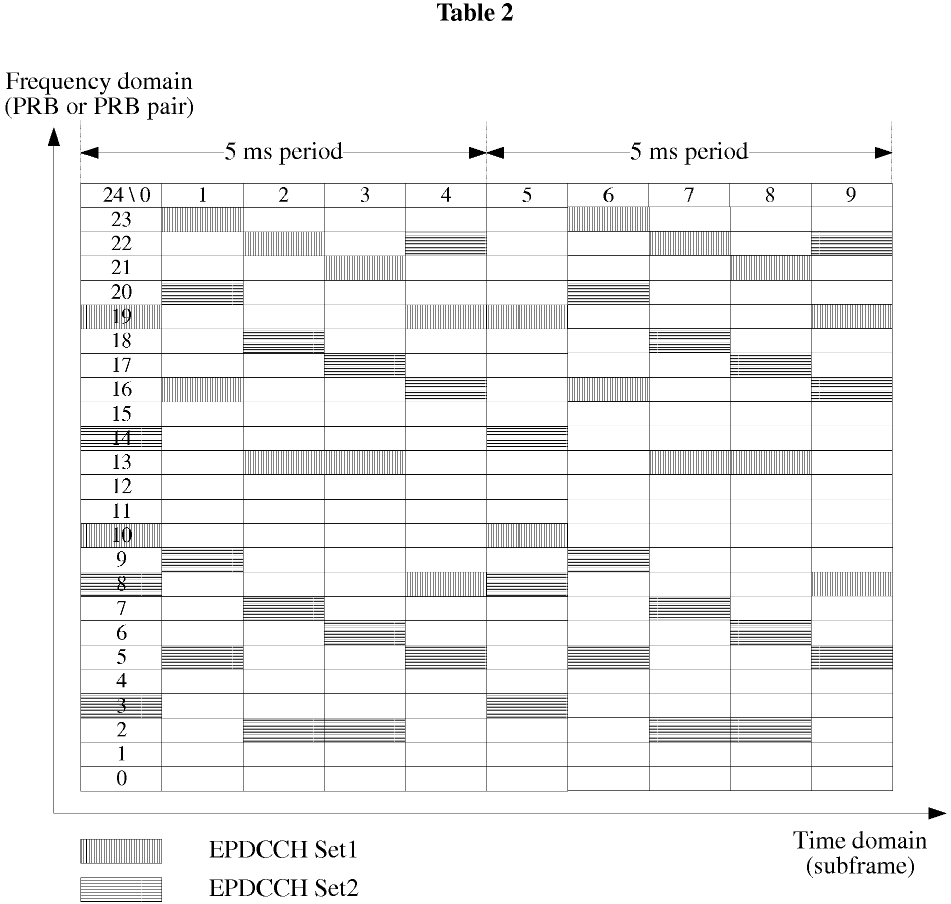

In addition, in some embodiments of the present invention, the configuration information may further include one or more types of the following four types of information:
d) transmit power information of the PRBs occupied by the control channel, where the transmit power information of the PRBs includes transmit power values of the PRBs and/or values of comparison between the transmit power values of the PRBs and a set power threshold; for example, the comparison value may include: power of EPDCCH Set1 is less than a set threshold 1, and power of EPDCCH Set2 is less than a set threshold 2; or power of EPDCCH Set1 is less than a set threshold 3, and power of EPDCCH Set2 is greater than the set threshold 3, or the like; and
   in some embodiments of the present invention, the transmit power values of the PRBs may be as follows: when the PRBs occupied by the control channel are a same PRB, the transmit power values are a transmit power value of the same PRB; or when at least two PRBs in the PRBs occupied by the control channel are different, the transmit power values include a transmit power value of each PRB occupied by the control channel;
e) a search space type of the control channel, where the search space type includes common search space or user equipment UE specific search space (UE specific search space); in the configuration information, which PRBs are used for the common search space and which PRBs are used for the UE specific search space are pointed out, and in this way, after receiving the configuration information of the EPDCCH, the neighboring base station can obtain more precise statuses of the PRBs; and in addition, information such as a start offset of a PUCCH resource relevant to the common search space and a dedicated search space may be further carried;
f) a distribution type of the control channel, where the distribution type includes a centralized type or a distributed type; and
g) a start OFDM symbol of the control channel in each subframe; and the start OFDM symbol may also be periodic, and periodicity rules for a start OFDM symbol and an offset of each subframe in a period of the start OFDM symbol, for example, a repetition period of the start OFDM symbol may be 5 ms, may be the same as or different from those in the configuration information of the EPDCCH.

S102: Send the configuration information to a neighboring base station, so that the neighboring base station performs adjustment according to the configuration information to reduce interference to the control channel of the base station.

The serving base station sends the configuration information to the neighboring base station, and the neighboring base station adjusts resource configuration or resource allocation of the neighboring base station according to the configuration information, to reduce interference to the control channel of the serving base station. In the present invention, roles of the serving base station and the neighboring base station may be interchanged, that is, the neighboring base station sends configuration information of a control channel of the neighboring base station to the serving base station, and then the serving base station correspondingly adjusts the control channel of the serving base station, to reduce interference to an important channel such as the control channel of the neighboring base station.

Specifically, after receiving the configuration information of the control channel, when performing downlink data scheduling, the neighboring base station may adjust the resource configuration or the resource allocation to reduce the interference to the serving base station, and avoid a conflict, for example, avoid as far as possible using a resource indicated in the configuration information, or use only small power, or schedule only UEs at some specific positions, to reduce or avoid the interference.

It should be noted that, in this embodiment, the present invention is described by using only the EPDCCH as an example of the control channel. In another embodiment of the present invention, the method may be used for another control channel, so that the neighboring base station can obtain configuration information of the control channel, to achieve an objective of reducing or even avoiding interference. For example, the another control channel may be at least one of a PUCCH (Physical Uplink Control CHannel, physical uplink control channel), a CRS (Cell-specific Reference Signal, cell-specific reference signal), a CSI-RS (Channel state information Reference Signal, channel state information reference signal), an SRS (Sounding Reference Signal, sounding reference signal), a DRS (Discovery Reference Signal, discovery reference signal, a PRACH (Physical Random Access Channel, physical random access channel), a PSS (Primary Synchronization Signal, primary synchronization signal), and an SSS (Secondary Synchronization Signal, secondary synchronization signal) of the serving base station, and the like. The method in this embodiment may be applied to the control channels and/or signals above, which is not limited in this embodiment of the present invention.

In this embodiment of the present invention, configuration information of a control channel of a current serving base station can be acquired, and the configuration information can be sent to a neighboring base station, where the configuration information may include one or more types of information in a configuration period of the control channel, physical resource blocks PRBs occupied by the control channel in the configuration period, a configuration period start position, and the like. After receiving the configuration information, the neighboring base station can precisely learn a status of PRB occupation, by the control channel, in the serving base station, and then can reduce interference to the serving base station by performing corresponding adjustment, avoiding a conflict, and thereby effectively resolving a problem of mutual interference of control channels between the base stations.

### Embodiment 2

This embodiment further elaborates, based on Embodiment 1, how to specifically "send the configuration information to a neighboring base station". In this embodiment, the sending the configuration information to a neighboring base station may specifically include:
sending the configuration information to the neighboring base station in a manner of carrying the configuration information by newly adding an information element IE to a load information Load Information message sent to the neighboring base station.

FIG. 2 is a schematic diagram of signaling according to Embodiment 2 of the present invention. A base station 1, that is, eNB1, sends the Load Information message as the serving base station, and a base station 2, that is, eNB2, receives the Load Information message as the neighboring base station of the serving base station. The Load Information message that carries the configuration information is transmitted by using an X2 interface between the base stations. A manner of the sending may be periodic, for example, the sending is performed every 20 ms; or the sending may be triggered by an event, for example, after the configuration information is changed, a Load Information message that carries new configuration information is sent; or the sending may be triggered by an event and performed periodically at the same time, for example, after the configuration information is changed, the serving base station begins to periodically send a Load Information message that carries new configuration information to the neighboring base station, where a period of the sending may be pre-configured in the base station, or may be fixed in a protocol.

In this embodiment of the present invention, configuration information of a control channel of a current serving base station can be acquired, and the configuration information can be sent to a neighboring base station, where the configuration information may include one or more types of information in a configuration period of the control channel, physical resource blocks PRBs occupied by the control channel in the configuration period, a configuration period start position, and the like. After receiving the configuration information, the neighboring base station can precisely learn a status of PRB occupation, by the control channel, in the serving base station, and then can reduce interference to the serving base station by performing corresponding adjustment, avoiding a conflict, and thereby effectively resolving a problem of mutual interference of control channels between the base stations.

### Embodiment 3

Similar to Embodiment 2, this embodiment further elaborates, also based on Embodiment 1, how to specifically "send the configuration information to a neighboring base station". In this embodiment, the sending the configuration information to a neighboring base station may specifically include:
sending the configuration information to the neighboring base station in a manner of carrying the configuration information by newly adding an IE to a setup request Setup Request message sent to the neighboring base station.

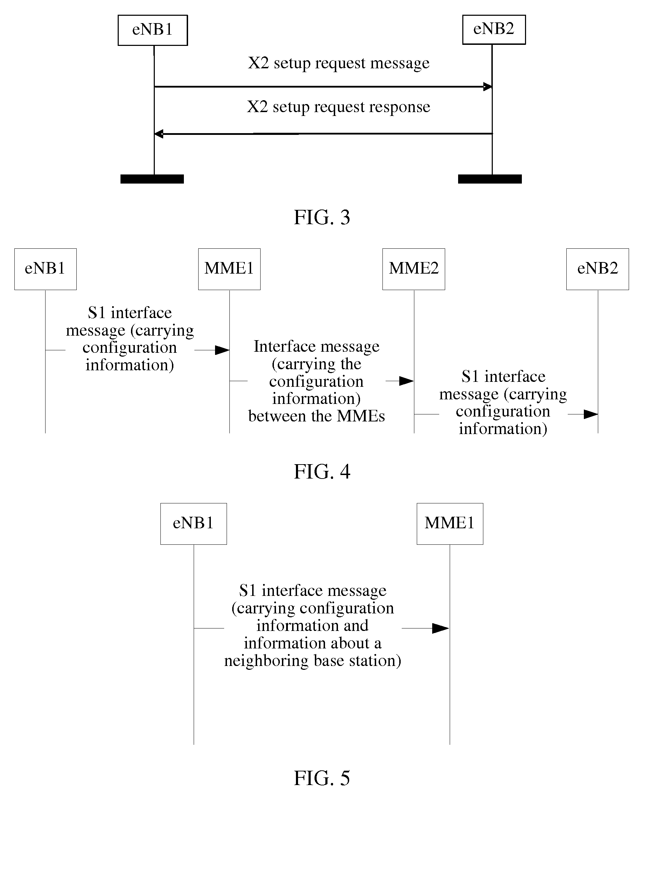

FIG. 3 is a schematic diagram of signaling according to Embodiment 3 of the present invention. The Setup Request message that carries the configuration information is also sent by using an X2 interface, and therefore may be referred to as an X2 Setup Request. After receiving the X2 Setup Request message that carries the configuration information, the neighboring base station eNB2 stores the configuration information and performs corresponding adjustment by using the configuration information, to reduce or even avoid interference to eNB1. For example, when performing downlink data scheduling, eNB2 avoids as far as possible using a resource indicated in the configuration information, or uses only small power, or schedules only UEs at some specific positions, for example, schedules only UEs in some directions or UE in the center of a cell, or does not configure a control channel of eNB2 on a resource indicated in the configuration information. In addition, after receiving the X2 Setup Request message, eNB2 sends an X2 Setup Response message as a response to eNB 1.

It should be noted that, in both of the foregoing Embodiment 2 and Embodiment 3, the configuration information is carried in an existing message; however, in some embodiments of the present invention, certainly, a new message may also be designed to carry the configuration information, which is not limited in this embodiment of the present invention.

In this embodiment of the present invention, configuration information of a control channel of a current serving base station can be acquired, and the configuration information can be sent to a neighboring base station, where the configuration information may include one or more types of information in a configuration period of the control channel, physical resource blocks PRBs occupied by the control channel in the configuration period, a configuration period start position, and the like. After receiving the configuration information, the neighboring base station can precisely learn a status of PRB occupation, by the control channel, in the serving base station, and then can reduce interference to the serving base station by performing corresponding adjustment, avoiding a conflict, and thereby effectively resolving a problem of mutual interference of control channels between the base stations.

### Embodiment 4

This embodiment further elaborates, still based on Embodiment 1, how to specifically "send the configuration information to a neighboring base station". Different from directly sending the message to the neighboring base station by using the X2 interface in Embodiment 2 and Embodiment 3, an idea of this embodiment is that a third party sends the configuration information to the neighboring base station, and therefore this embodiment may be used in a scenario in which there is no X2 interface between the serving base station and the neighboring base station. In this embodiment, the sending the configuration information to a neighboring base station may specifically include:
sending the configuration information to a first mobility management entity MME, so that the first MME sends the configuration information to a second MME, and the second MME sends the configuration information to the neighboring base station, where the first MME is an MME to which the base station belongs, and the second MME is an MME to which the neighboring base station belongs; or
sending the configuration information to a third MME, so that the third MME sends the configuration information to the neighboring base station, where the third MME is an MME to which the base station and the neighboring base station both belong.

FIG. 4 is a schematic diagram of first signaling according to Embodiment 4 of the present invention. In this embodiment, a message may be transmitted between a base station and an MME by using an S1 interface. First, eNB1 sends an S1 interface message that carries the configuration information of the control channel to MME1 to which eNB1 belongs, where the S1 interface message may be a Load Information message or an S1 Setup Request message, or may be another existing message, or may be a newly designed message. Then, MME1 sends the configuration information to MME2 to which eNB2 belongs by using an interface message between the MMEs. Finally, MME2 sends the configuration information to eNB2 by using an S1 interface message. Certainly, if eNB1 and eNB2 both belong to a same MME, in the signaling diagram, the step in which MME1 sends the configuration information to MME2 by using the interface message between the MMEs may be omitted.

In addition, in some embodiments of the present invention, when the sending is to be performed by a third party, the configuration information may also be specifically sent to the neighboring base station by means of OAM operation, administration and maintenance.

An MME or an OAM entity is responsible for managing which neighboring base stations the serving base station has. The serving base station may acquire information about the neighboring base station of the serving base station by performing measurement, or from a measurement result reported by UE, or by means of OAM, and report the information to the MME. When receiving the configuration information of the control channel of the serving base station, the MME can send the configuration information of the control channel of the serving base station to the neighboring base station of the serving base station according to the previously obtained information about the neighboring base station of the serving base station. In addition, the serving base station may also not report the neighboring base station of the serving base station in advance, but directly add the information about the neighboring base station of the serving base station, such as a base station identifier and a cell identifier, at the same time when sending the configuration information of the control channel of the serving base station to the MME (referring to FIG. 5), and then according to the information, the MME sends the configuration information of the serving base station to another MME, that is, an MME to which the corresponding neighboring base station belongs, or directly sends the configuration information of the serving base station to the corresponding neighboring base station.

In this embodiment of the present invention, configuration information of a control channel of a current serving base station can be acquired, and the configuration information can be sent to a neighboring base station, where the configuration information may include one or more types of information in a configuration period of the control channel, physical resource blocks PRBs occupied by the control channel in the configuration period, a configuration period start position, and the like. After receiving the configuration information, the neighboring base station can precisely learn a status of PRB occupation, by the control channel, in the serving base station, and then can reduce interference to the serving base station by performing corresponding adjustment, avoiding a conflict, and thereby effectively resolving a problem of mutual interference of control channels between the base stations.

### Embodiment 5

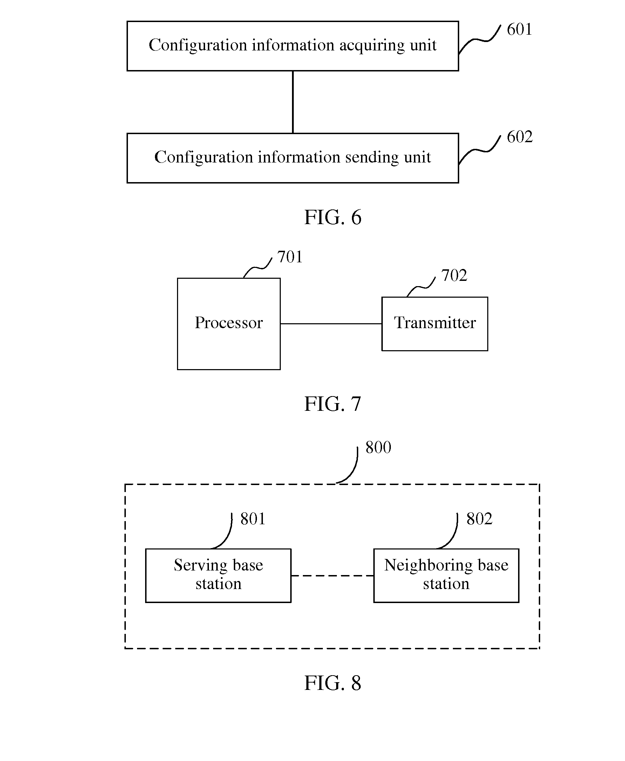

FIG. 6 is a schematic diagram of an apparatus according to Embodiment 5 of the present invention. This embodiment provides an apparatus for reducing interference to a control channel, where the apparatus includes:
a configuration information acquiring unit 601, configured to acquire configuration information of the control channel, where the configuration information includes at least one of the following information: a configuration period of the control channel, resource occupation indication information, and a configuration period start position, where the resource occupation indication information is used to indicate physical resource blocks PRBs occupied by the control channel in the configuration period, and the configuration period start position is used to indicate a corresponding start point at the beginning of the configuration period; and
a configuration information sending unit 602, configured to send the configuration information to a neighboring base station, so that the neighboring base station performs adjustment according to the configuration information to reduce interference to the control channel of the base station.

Preferably, when the base station is synchronous with the neighboring base station, the configuration period start position includes a subframe number at the beginning of the configuration period; or when the base station is not synchronous with the neighboring base station, the configuration period start position includes a subframe number at the beginning of the configuration period plus a timing offset between the base station and the neighboring base station.

Preferably, the configuration information further includes at least one of the following information:
transmit power information of the PRBs occupied by the control channel, where the transmit power information of the PRBs includes transmit power values of the PRBs and/or values of comparison between the transmit power values of the PRBs and a set power threshold;
a search space type of the control channel, where the search space type includes common search space or user equipment UE specific search space;
a distribution type of the control channel, where the distribution type includes a centralized type or a distributed type; and
a start OFDM symbol of the control channel in each subframe.

Preferably, when the PRBs occupied by the control channel are a same PRB, the transmit power values are a transmit power value of the same PRB; or when at least two PRBs in the PRBs occupied by the control channel are different, the transmit power values include a transmit power value of each PRB occupied by the control channel.

Preferably,
the configuration information sending unit is configured to send the configuration information to the neighboring base station in a manner of carrying the configuration information by newly adding an information element IE to a load information Load Information message sent to the neighboring base station; or
the configuration information sending unit is configured to send the configuration information to the neighboring base station in a manner of carrying the configuration information by newly adding an IE to a setup request Setup Request message sent to the neighboring base station.

Preferably, the configuration information sending unit is configured to send the configuration information to the neighboring base station by means of operation, administration and maintenance OAM.

Preferably,
the configuration information sending unit is configured to send the configuration information to a first mobility management entity MME, so that the first MME sends the configuration information to a second MME, and the second MME sends the configuration information to the neighboring base station, where the first MME is an MME to which the base station belongs, and the second MME is an MME to which the neighboring base station belongs; or
the configuration information sending unit is configured to send the configuration information to a third MME, so that the third MME sends the configuration information to the neighboring base station, where the third MME is an MME to which the base station and the neighboring base station both belong.

For an apparatus embodiment, the apparatus embodiment basically corresponds to a method embodiment, and therefore for a relevant point, reference may be made to some description in a method embodiment. The apparatus embodiment described above is merely exemplary, and an objective of a solution in this embodiment may be achieved by selecting some or all units in the apparatus embodiment according to an actual need. A person of ordinary skill in the art may understand and implement the solution without creative efforts.

In this embodiment of the present invention, configuration information of a control channel of a current serving base station can be acquired, and the configuration information can be sent to a neighboring base station, where the configuration information may include one or more types of information in a configuration period of the control channel, physical resource blocks PRBs occupied by the control channel in the configuration period, a configuration period start position, and the like. After receiving the configuration information, the neighboring base station can precisely learn a status of PRB occupation, by the control channel, in the serving base station, and then can reduce interference to the serving base station by performing corresponding adjustment, avoiding a conflict, and thereby effectively resolving a problem of mutual interference of control channels between the base stations.

### Embodiment 6

FIG. 7 is a schematic diagram of a device according to Embodiment 6 of the present invention. This embodiment provides a device for reducing interference to a control channel, where the device includes:
a processor 701, configured to acquire configuration information of the control channel, where the configuration information includes at least one of the following information: a configuration period of the control channel, resource occupation indication information, and a configuration period start position, where the resource occupation indication information is used to indicate physical resource blocks PRBs occupied by the control channel in the configuration period, and the configuration period start position is used to indicate a corresponding start point at the beginning of the configuration period; and
a transmitter 702, configured to send the configuration information to a neighboring base station, so that the neighboring base station performs adjustment according to the configuration information to reduce interference to the control channel of the base station.

Preferably, when the base station is synchronous with the neighboring base station, the configuration period start position includes a subframe number at the beginning of the configuration period; or when the base station is not synchronous with the neighboring base station, the configuration period start position includes a subframe number at the beginning of the configuration period plus a timing offset between the base station and the neighboring base station.

Preferably, the configuration information further includes at least one of the following information:
transmit power information of the PRBs occupied by the control channel, where the transmit power information of the PRBs includes transmit power values of the PRBs and/or values of comparison between the transmit power values of the PRBs and a set power threshold;
a search space type of the control channel, where the search space type includes common search space or user equipment UE specific search space;
a distribution type of the control channel, where the distribution type includes a centralized type or a distributed type; and
a start OFDM symbol of the control channel in each subframe.

Preferably, when the PRBs occupied by the control channel are a same PRB, the transmit power values are a transmit power value of the same PRB; or when at least two PRBs in the PRBs occupied by the control channel are different, the transmit power values include a transmit power value of each PRB occupied by the control channel.

Preferably,
the transmitter is configured to send the configuration information to the neighboring base station in a manner of carrying the configuration information by newly adding an information element IE to a load information Load Information message sent to the neighboring base station; or
the transmitter is configured to send the configuration information to the neighboring base station in a manner of carrying the configuration information by newly adding an IE to a setup request Setup Request message sent to the neighboring base station.

Preferably, the transmitter is configured to send the configuration information to the neighboring base station by means of operation, administration and maintenance OAM.

Preferably,
the transmitter is configured to send the configuration information to a first mobility management entity MME, so that the first MME sends the configuration information to a second MME, and the second MME sends the configuration information to the neighboring base station, where the first MME is an MME to which the base station belongs, and the second MME is an MME to which the neighboring base station belongs; or
the transmitter is configured to send the configuration information to a third MME, so that the third MME sends the configuration information to the neighboring base station, where the third MME is an MME to which the base station and the neighboring base station both belong.

For a device embodiment, the device embodiment basically corresponds to a method embodiment, and therefore for a relevant point, reference may be made to some description in a method embodiment. The device embodiment described above is merely exemplary. The units described as separate parts may or may not be physically separate, that is, may be located at one position, or may be distributed on multiple network units. An objective of a solution in this embodiment may be achieved by selecting some or all modules in the device embodiment according to an actual need. A person of ordinary skill in the art may understand and implement the solution without creative efforts.

In this embodiment of the present invention, configuration information of a control channel of a current serving base station can be acquired, and the configuration information can be sent to a neighboring base station, where the configuration information may include one or more types of information in a configuration period of the control channel, physical resource blocks PRBs occupied by the control channel in the configuration period, a configuration period start position, and the like. After receiving the configuration information, the neighboring base station can precisely learn a status of PRB occupation, by the control channel, in the serving base station, and then can reduce interference to the serving base station by performing corresponding adjustment, avoiding a conflict, and thereby effectively resolving a problem of mutual interference of control channels between the base stations.

### Embodiment 7

FIG. 8 is a schematic diagram of a system according to Embodiment 7 of the present invention. This embodiment provides a system 800 for reducing interference to a control channel, where the system includes:
a serving base station 801, configured to acquire configuration information of the control channel, where the configuration information includes at least one of the following information: a configuration period of the control channel, resource occupation indication information, and a configuration period start position, where the resource occupation indication information is used to indicate physical resource blocks PRBs occupied by the control channel in the configuration period, and the configuration period start position is used to indicate a corresponding start point at the beginning of the configuration period; and send the configuration information to a neighboring base station, so that the neighboring base station performs adjustment according to the configuration information to reduce interference to the control channel of the base station; and
the neighboring base station 802, configured to receive the configuration information, and perform adjustment according to the configuration information to reduce the interference to the control channel of the serving base station.

In terms of a system embodiment, the system embodiment basically corresponds to a method embodiment, and therefore for a relevant point, reference may be made to some description in a method embodiment.

In this embodiment of the present invention, configuration information of a control channel of a current serving base station can be acquired, and the configuration information can be sent to a neighboring base station, where the configuration information may include one or more types of information in a configuration period of the control channel, physical resource blocks PRBs occupied by the control channel in the configuration period, a configuration period start position, and the like. After receiving the configuration information, the neighboring base station can precisely learn a status of PRB occupation, by the control channel, in the serving base station, and then can reduce interference to the serving base station by performing corresponding adjustment, avoiding a conflict, and thereby effectively resolving a problem of mutual interference of control channels between the base stations.

The present invention can be described in the general context of executable computer instructions executed by a computer, for example, a program module. Generally, the program unit includes a routine, program, object, component, data structure, and the like for executing a particular task or implementing a particular abstract data type. The present invention may also be practiced in distributed computing environments in which tasks are performed by remote processing devices that are connected by using a communications network. In a distributed computing environment, program modules may be located in both local and remote computer storage media including storage devices.

A person of ordinary skill in the art may understand that all or a part of the steps of the method embodiments may be implemented by a program instructing relevant hardware. The program may be stored in a computer readable storage medium, such as a ROM, a RAM, a magnetic disc, or an optical disc.

It should further be noted that in this specification, relational terms such as first and second are only used to distinguish one entity or operation from another, and do not necessarily require or imply that any actual relationship or sequence exists between these entities or operations. Moreover, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element preceded by "includes a ..." does not, without more constraints, preclude the existence of additional identical elements in the process, method, article, or apparatus that includes the element.

The foregoing descriptions are merely exemplary embodiments of the present invention, but are not intended to limit the protection scope of the present invention. Specific examples are used in this specification to describe the principle and implementation manners of the present invention. The descriptions of the foregoing embodiments are merely intended to help understand the method and core idea of the present invention. In addition, a person skilled in the art may, according to the idea of the present invention, make modifications with respect to the specific implementation manners and the application scope. Therefore, the content of this specification shall not be construed as a limitation on the present invention. Therefore, the content of this specification shall not be construed as a limitation on the present invention. Any modification, equivalent replacement, or improvement made without departing from the spirit and principle of the present invention shall fall within the protection scope of the present invention.

## Claims

1. A method for reducing interference to a control channel, applied to a base station, wherein the method comprises:
acquiring configuration information of the control channel, wherein the configuration information comprises at least one of the following information: a configuration period of the control channel, resource occupation indication information, and a configuration period start position, wherein the resource occupation indication information is used to indicate physical resource blocks PRBs occupied by the control channel in the configuration period, and the configuration period start position is used to indicate a corresponding start point at the beginning of the configuration period; and
sending the configuration information to a neighboring base station, so that the neighboring base station performs adjustment according to the configuration information to reduce interference to the control channel of the base station.

2. The method according to claim 1, wherein
when the base station is synchronous with the neighboring base station, the configuration period start position comprises a subframe number at the beginning of the configuration period; or when the base station is not synchronous with the neighboring base station, the configuration period start position comprises a subframe number at the beginning of the configuration period plus a timing offset between the base station and the neighboring base station.

3. The method according to claim 1, wherein the configuration information further comprises at least one of the following information:
transmit power information of the PRBs occupied by the control channel, wherein the transmit power information of the PRBs comprises transmit power values of the PRBs and/or values of comparison between the transmit power values of the PRBs and a set power threshold;
a search space type of the control channel, wherein the search space type comprises common search space or user equipment UE specific search space;
a distribution type of the control channel, wherein the distribution type comprises a centralized type or a distributed type; and
a start OFDM symbol of the control channel in each subframe.

4. The method according to claim 3, wherein when the PRBs occupied by the control channel are a same PRB, the transmit power values are a transmit power value of the same PRB; or when at least two PRBs in the PRBs occupied by the control channel are different, the transmit power values comprise a transmit power value of each PRB occupied by the control channel.

5. The method according to any one of claims 1 to 4, wherein the sending the configuration information to a neighboring base station comprises:
sending the configuration information to the neighboring base station in a manner of carrying the configuration information by newly adding an information element IE to a load information Load Information message sent to the neighboring base station; or
sending the configuration information to the neighboring base station in a manner of carrying the configuration information by newly adding an IE to a setup request Setup Request message sent to the neighboring base station.

6. The method according to any one of claims 1 to 4, wherein the sending the configuration information to a neighboring base station comprises:
sending the configuration information to the neighboring base station by means of operation, administration and maintenance OAM.

7. The method according to any one of claims 1 to 4, wherein the sending the configuration information to a neighboring base station comprises:
sending the configuration information to a first mobility management entity MME, so that the first MME sends the configuration information to a second MME, and the second MME sends the configuration information to the neighboring base station, wherein the first MME is an MME to which the base station belongs, and the second MME is an MME to which the neighboring base station belongs; or
sending the configuration information to a third MME, so that the third MME sends the configuration information to the neighboring base station, wherein the third MME is an MME to which the base station and the neighboring base station both belong.

8. An apparatus for reducing interference to a control channel, wherein the apparatus comprises:
a configuration information acquiring unit, configured to acquire configuration information of the control channel, wherein the configuration information comprises at least one of the following information: a configuration period of the control channel, resource occupation indication information, and a configuration period start position, wherein the resource occupation indication information is used to indicate physical resource blocks PRBs occupied by the control channel in the configuration period, and the configuration period start position is used to indicate a corresponding start point at the beginning of the configuration period; and
a configuration information sending unit, configured to send the configuration information to a neighboring base station, so that the neighboring base station performs adjustment according to the configuration information to reduce interference to the control channel of the base station.

9. The apparatus according to claim 8, wherein
when the base station is synchronous with the neighboring base station, the configuration period start position comprises a subframe number at the beginning of the configuration period; or when the base station is not synchronous with the neighboring base station, the configuration period start position comprises a subframe number at the beginning of the configuration period plus a timing offset between the base station and the neighboring base station.

10. The apparatus according to claim 8, wherein the configuration information further comprises at least one of the following information:
transmit power information of the PRBs occupied by the control channel, wherein the transmit power information of the PRBs comprises transmit power values of the PRBs and/or values of comparison between the transmit power values of the PRBs and a set power threshold;
a search space type of the control channel, wherein the search space type comprises common search space or user equipment UE specific search space;
a distribution type of the control channel, wherein the distribution type comprises a centralized type or a distributed type; and
a start OFDM symbol of the control channel in each subframe.

11. The apparatus according to claim 10, wherein when the PRBs occupied by the control channel are a same PRB, the transmit power values are a transmit power value of the same PRB; or when at least two PRBs in the PRBs occupied by the control channel are different, the transmit power values comprise a transmit power value of each PRB occupied by the control channel.

12. The apparatus according to any one of claims 8 to 11, wherein
the configuration information sending unit is configured to send the configuration information to the neighboring base station in a manner of carrying the configuration information by newly adding an information element IE to a load information Load Information message sent to the neighboring base station; or
the configuration information sending unit is configured to send the configuration information to the neighboring base station in a manner of carrying the configuration information by newly adding an IE to a setup request Setup Request message sent to the neighboring base station.

13. The apparatus according to any one of claims 8 to 11, wherein
the configuration information sending unit is configured to send the configuration information to the neighboring base station by means of operation, administration and maintenance OAM.

14. The apparatus according to any one of claims 8 to 11, wherein
the configuration information sending unit is configured to send the configuration information to a first mobility management entity MME, so that the first MME sends the configuration information to a second MME, and the second MME sends the configuration information to the neighboring base station, wherein the first MME is an MME to which the base station belongs, and the second MME is an MME to which the neighboring base station belongs; or
the configuration information sending unit is configured to send the configuration information to a third MME, so that the third MME sends the configuration information to the neighboring base station, wherein the third MME is an MME to which the base station and the neighboring base station both belong.

15. A device for reducing interference to a control channel, wherein the device comprises:
a processor, configured to acquire configuration information of the control channel, wherein the configuration information comprises at least one of the following information: a configuration period of the control channel, resource occupation indication information, and a configuration period start position, wherein the resource occupation indication information is used to indicate physical resource blocks PRBs occupied by the control channel in the configuration period, and the configuration period start position is used to indicate a corresponding start point at the beginning of the configuration period; and
a transmitter, configured to send the configuration information to a neighboring base station, so that the neighboring base station performs adjustment according to the configuration information to reduce interference to the control channel of the base station.

16. The device according to claim 15, wherein
when the base station is synchronous with the neighboring base station, the configuration period start position comprises a subframe number at the beginning of the configuration period; or when the base station is not synchronous with the neighboring base station, the configuration period start position comprises a subframe number at the beginning of the configuration period plus a timing offset between the base station and the neighboring base station.

17. The device according to claim 15, wherein the configuration information further comprises at least one of the following information:
transmit power information of the PRBs occupied by the control channel, wherein the transmit power information of the PRBs comprises transmit power values of the PRBs and/or values of comparison between the transmit power values of the PRBs and a set power threshold;
a search space type of the control channel, wherein the search space type comprises common search space or user equipment UE specific search space;
a distribution type of the control channel, wherein the distribution type comprises a centralized type or a distributed type; and
a start OFDM symbol of the control channel in each subframe.

18. The device according to claim 17, wherein when the PRBs occupied by the control channel are a same PRB, the transmit power values are a transmit power value of the same PRB; or when at least two PRBs in the PRBs occupied by the control channel are different, the transmit power values comprise a transmit power value of each PRB occupied by the control channel.

19. The device according to any one of claim 15 to 18, wherein
the transmitter is configured to send the configuration information to the neighboring base station in a manner of carrying the configuration information by newly adding an information element IE to a load information Load Information message sent to the neighboring base station; or
the transmitter is configured to send the configuration information to the neighboring base station in a manner of carrying the configuration information by newly adding an IE to a setup request Setup Request message sent to the neighboring base station.

20. The device according to any one of claim 15 to 18, wherein
the transmitter is configured to send the configuration information to the neighboring base station by means of operation, administration and maintenance OAM.

21. The device according to any one of claim 15 to 18, wherein
the transmitter is configured to send the configuration information to a first mobility management entity MME, so that the first MME sends the configuration information to a second MME, and the second MME sends the configuration information to the neighboring base station, wherein the first MME is an MME to which the base station belongs, and the second MME is an MME to which the neighboring base station belongs; or
the transmitter is configured to send the configuration information to a third MME, so that the third MME sends the configuration information to the neighboring base station, wherein the third MME is an MME to which the base station and the neighboring base station both belong.

22. A system for reducing interference to a control channel, wherein the system comprises:
a serving base station, configured to acquire configuration information of the control channel, wherein the configuration information comprises at least one of the following information: a configuration period of the control channel, resource occupation indication information, and a configuration period start position, wherein the resource occupation indication information is used to indicate physical resource blocks PRBs occupied by the control channel in the configuration period, and the configuration period start position is used to indicate a corresponding start point at the beginning of the configuration period; and send the configuration information to a neighboring base station, so that the neighboring base station performs adjustment according to the configuration information to reduce interference to the control channel of the base station; and
the neighboring base station, configured to receive the configuration information, and perform adjustment according to the configuration information to reduce the interference to the control channel of the serving base station.
